# EUROPÄISCHE PATENTSCHRIFT

(11) **EP 1 616 113 B1**
(45) Veröffentlichungstag und Bekanntmachung des Hinweises auf die Patenterteilung: **03.09.2008**
(21) Anmeldenummer: 04728104.3
(22) Anmeldetag: 17.04.2004
(51) Int. Cl.: F16H 1/28, F16H 1/46

(54) **PLANETENGETRIEBE**
PLANETARY GEAR SYSTEM
ENGRENAGE PLANETAIRE

(30) Priorität: 24.04.2003 DE 10318517
(43) Veröffentlichungstag der Anmeldung: 18.01.2006
(73) Patentinhaber: ZF FRIEDRICHSHAFEN Aktiengesellschaft, 88038 Friedrichshafen (DE)
(72) Erfinder: SCHULZ, Horst, 88045 Friedrichshafen (DE); KIRSCHNER, Tino, 88097 Eriskirch (DE)
(86) Internationale Anmeldenummer: PCT/EP2004/004099
(87) Internationale Veröffentlichungsnummer: WO 2004/094867

(56) Entgegenhaltungen:
- DE-A- 10 144 805
- DE-A- 19 525 831
- DE-A- 19 720 255
- US-A- 1 499 763

## Beschreibung

Die Erfindung betrifft ein Planetengetriebe mit einem von einem Antriebsmotor antreibbaren Sonnenrad, einem in einem Gehäuse angeordneten Hohlrad, einer Gruppe von ersten Planeten und einer Gruppe von zweiten Planeten, die als Stufenplaneten mit kleinen und großen Stufenrädern ausgebildet sind, bei dem jeder der ersten Planeten mit seinem einzigen Verzahnungsbereich gleichzeitig mit dem Hohlrad und einem kleinen Stufenrad eines Stufenplaneten in Eingriff ist, die großen Stufenräder der Stufenplaneten mit dem Sonnenrad in Eingriff sind und bei dem die ersten Planeten und die Stufenplaneten in einem gemeinsamen Planetenträger gelagert sind, wobei die Anzahl der Stufenplaneten der halben Anzahl der ersten Planeten entspricht und die kleinen Stufenräder der Stufenplaneten gleichzeitig mit einem Paar von benachbarten ersten Planeten in Eingriff stehen, entsprechend dem Oberbegriff der Ansprüche 1, 3.

Ein gattungsbildendes Getriebe ist in der DE 101 44 805 offenbart. Dieses bekannte Getriebe zeichnet sich bereits durch einen hohen Wirkungsgrad, geringes Verdrehspiel, hohe Übertragungstreue und eine geringe Geräuschentwicklung aus. Darüber hinaus ist das Getriebe axial sehr kurz bauend, für Ausführungen mit einem Zentraldurchlaß geeignet und sehr unempfindlich gegenüber Fertigungstoleranzen.

Dieses Getriebe erlaubt jedoch keine individuelle Spieleinstellung, die für manche Anwendungen mit allerhöchsten Präzisionsanforderungen gefordert ist.

Die EP 0 981 697 B1 offenbart ein spielarmes Planetengetriebe, welches für sehr hohe Übersetzungsanforderungen geeignet ist. Es hat jedoch einen etwas größeren Bauraumbedarf und ist aufwendiger in der Herstellung.

Der Erfindung liegt also die Aufgabe zugrunde, ein gattungsgemäßes Getriebe derart weiterzubilden, dass das Verzahnungsspiel einstellbar und eine noch höhere Präzision erzielbar ist.

Dieses Aufgabe wird durch ein Getriebe mit den Merkmalen der Ansprüche 1, 3 gelöst.

Vorteilhafte Ausgestaltungen sind durch die Unteransprüche gegeben.

Dadurch, dass das Hohlrad und die ersten Planeten konisch ausgebildet sind, ist das Verzahnungsspiel zwischen den ersten Planeten und dem Hohlrad anhand der Einstellmittel für die Einstellung der axialen Position der ersten Planeten einstellbar. Das Gesamtverdrehspiel des Getriebes wird insbesondere durch diese Verzahnungsspiele bestimmt.

In einer vorteilhaften Ausgestaltung der Erfindung ist jedem der ersten Planeten ein individuelles Einstellmittel für die Einstellung der axialen Position zugeordnet, entlang seiner Drehachse. Alternativ kann ebenso ein gemeinsames Einstellmittel für alle Planeten vorgesehen oder die axiale Position des Planetenträgers gegenüber dem Hohlrad einstellbar sein. Als Einstellmittel können Einstellscheiben bzw. Anlaufscheiben dienen, welche bei der Montage in passender Dicke gewählt werden.

In einer vorteilhaften Ausgestaltung bestehen die Einstellmittel aus Gewindestiften, welche jedem der ersten Planeten zugeordnet sind, die mit einem Ende in einer Gewindebohrung im Planetenträger sitzen und mit einem freien Ende mit den Planeten oder deren Lagerung zusammenwirken und ein axiales Zurückweichen der Planeten aus den Zahneingriffen mit dem Hohlrad verhindern.

Gemäß einer vorteilhaften Weiterbildung ist zwischen einer Stirnfläche jedes ersten Planeten und dem freien Ende des zugeordneten Gewindestifts eine Anlaufscheibe angeordnet.

Ein Verdrehen der Anlaufscheiben kann vermieden werden, wenn für jeweils zwei nebeneinanderliegende erste Planeten eine gemeinsame Anlaufscheibe vorgesehen ist, welche durch beide Planetenachsen gegenüber einem Verdrehen gesichert ist.

Bei einer Ausführungsform verlaufen die Drehachsen der ersten Planeten und der Stufenplaneten parallel zu einer Getriebehauptachse, wobei die kleinen Stufenräder der Stufenplaneten konisch ausgebildet sind, damit sie an die konische Verzahnung der ersten Planeten angepaßt sind. Bei dieser Ausführungsform sind die Gehäusebohrungen parallel zur Getriebehauptachse und der Einstellaufwand während der Montage ist verhältnismäßig gering. Das Verzahnungsspiel zwischen den kleinen Stufenrädern der Stufenplaneten und den ersten Planeten kann durch axiale Verstellung der Stufenplaneten eingestellt werden.

Die großen Stufenräder der Stufenplaneten und das Sonnenrad können zumindest annähernd zylindrisch ausgebildet sein. Zwar ist dann das Verzahnungsspiel an dieser Stelle nicht einstellbar, jedoch ist die Auswirkung auf das Gesamtspiel bei dieser Verzahnung äußerst gering.

In vorteilhafter Weise ist die Konusrichtung der kleinen Stufenräder der Stufenplaneten so gewählt, dass sich der Konus in Richtung zu den großen Stufenrädern hin verjüngt, d. h., dass die kleinen Stufenräder der Stufenplaneten zu ihrem freien Ende hin verdicken. Das Verzahnungsspiel kann in diesem Fall dadurch verringert werden, dass die Stufenplaneten in Richtung ihrer großen Stufenräder verschoben werden, was sich besonders einfach realisieren läßt.

Bei einer alternativen Ausführungsform sind die Drehachsen der ersten Planeten und der Stufenplaneten nicht parallel zur Getriebehauptachse angeordnet. Vielmehr sind die Drehachsen der ersten Planeten um einen Neigungswinkel α und die Drehachsen der Stufenplaneten um einen Neigungswinkel β gegenüber der Getriebehauptachse geneigt. Die kleinen Stufenräder der Stufenplaneten können bei dieser Ausführungsform zumindest zylindrisch ausgebildet sein, wodurch sie kostengünstig im Einzelteilungs-Schleifverfahren hergestellt werden können. Eine geringe Konizität von bis zu 0,5° Neigung der Flankenlinien kann zugelassen werden, da hier im Einzelteilungs-Schleifverfahren noch keine wesentlichen Zahnprofil-Abweichungen entstehen.

Bei dieser Ausführungsform ist vorteilhaft, dass auch das Verzahnungsspiel an der Verzahnung Sonnenrad mit den großen Stufenrädern einstellbar ist. Dazu können die großen Stufenräder der Stufenplaneten konisch und das Sonnenrad, zumindest annähernd, zylindrisch ausgebildet sein. In vorteilhafter Weise schneiden sich zumindest die Drehachsen der ersten Planeten, die Drehachsen der zweiten Planeten und die Getriebehauptsachse.

Vorteilhafte Werte für die Neigungswinkel α der ersten Planeten und die Neigungswinkel β der zweiten Planeten liegen im Bereich zwischen 1,2 und 5,0°.

Für die Spieleinstellbarkeit können die Stufenplaneten axial verschiebbar im Planetenträger gelagert sein. Dazu werden zusätzlich entweder Einstellmittel für die Einstellung der axialen Position der Stufenplaneten entlang ihrer Drehachsen benötigt oder Vorspannmittel, die eine Axialkraft vom Planetenträger auf die Stufenplaneten ausüben. In vorteilhafter Weise sind die Vorspannmittel als gewellte Anlaufscheiben oder als geschlitzte Tellerfedern ausgebildet.

Ein Verfahren zur Herstellung eines erfindungsgemäßen Planetengetriebes ist gekennzeichnet durch folgende Montageschritte:
- Montage aller ersten Planeten im Planetenträger in einer axialen Grenzstellung, die maximales Flankenspiel ergibt;
- Montage des Sonnenrads;
- Zentrierung des Sonnenrads in einer Vorrichtung;
- Einschieben der Stufenplaneten in den Planetenträger bis zu einer gewünschten Axialposition, die in der ersten Stufe das gewünschte Zahnspiel ergibt;
- axiales Zustellen der ersten Planeten über die Gewindestifte und Anlaufscheiben bis zu einer gewünschten Axialposition entlang der radial geneigten Planetenbolzen, bis ein gewünschtes Zahnspiel zwischen den ersten Planeten und den kleinen Stufenrädern der Stufenplaneten erzielt ist und
- axiales Zustellen des Hohlrads durch dickenvariable Einstellscheiben an einer Ringschulter des Lagers, um auch das Verzahnungsspiel zwischen Hohlrad und den ersten Planeten einzustellen.

Die Erfindung wird anhand der beiliegenden Figuren näher erläutert.
Darin zeigen:
- Fig. 1: eine schematische Draufsicht auf die miteinander verzahnten Räder;
- Fig. 2: einen Längs-Schnitt durch eine erste Ausführungsform eines erfindungsgemäßen Planetengetriebes;
- Fig. 3: einen Längs-Schnitt durch eine zweite Ausführungsform eines erfindungsgemäßen Planetengetriebes und
- Fig. 4: eine Draufsicht eines erfindungsgemäßen Getriebes.

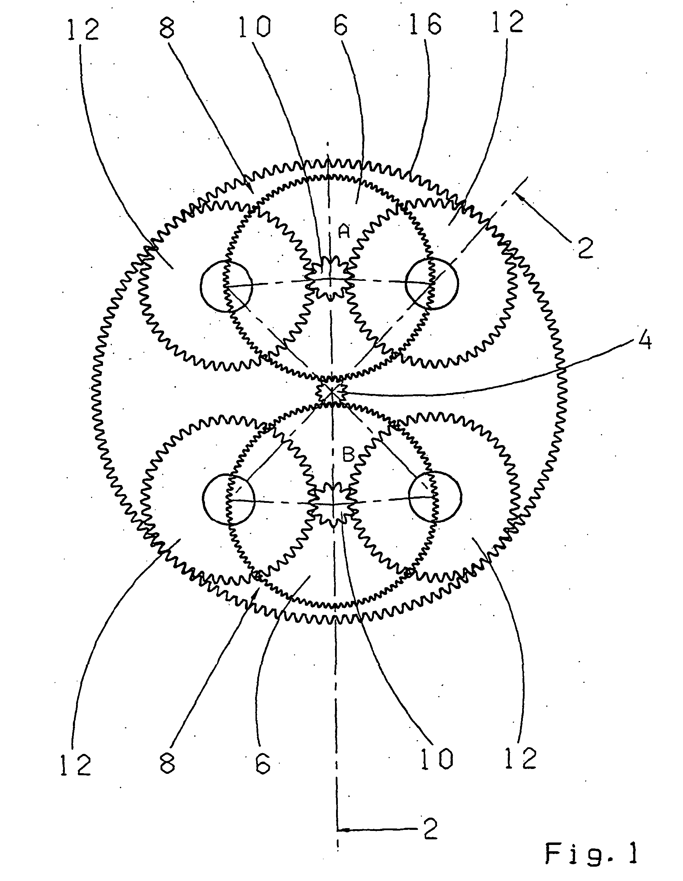

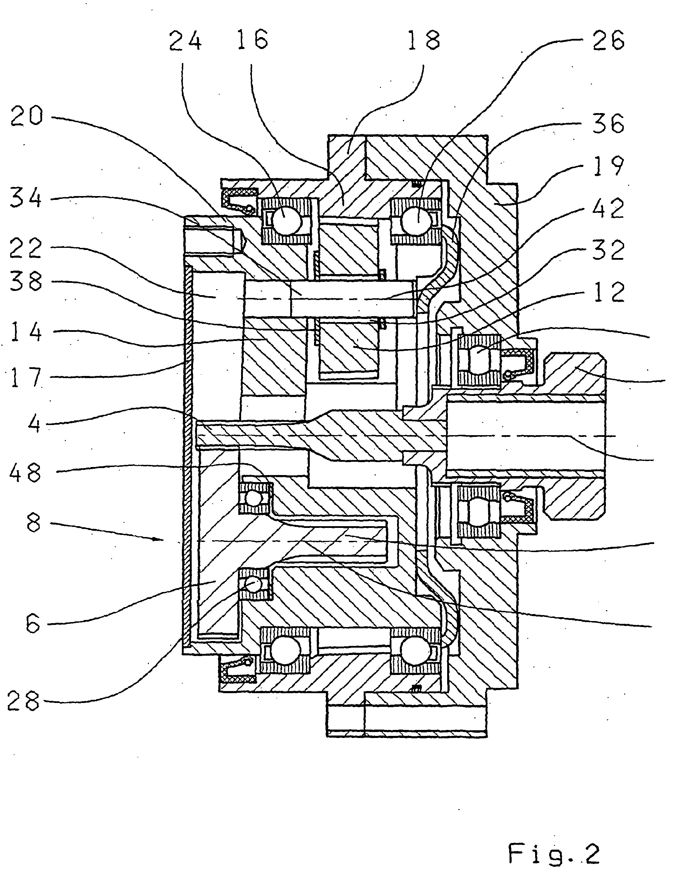

In Fig. 1 ist mit 4 ein antreibbares Sonnenrad bezeichnet. Es ist in gleichzeitigem Zahneingriff mit großen Stufenrädern 6 eines Paares von benachbart gegenüberliegenden Stufenplaneten 8. Die Stufenplaneten 8 weisen kleine Stufenräder 10 auf, von denen jedes wiederum mit einem Paar von Planeten 12 in Eingriff sind. Jeder der Planeten 12 ist in gleichzeitigem Zahneingriff mit einem kleinen Stufenrad 10 eines Stufenplaneten 8 und einem Hohlrad 16. Aus Fig. 1 ist ferner der Schnitt-Verlauf ersichtlich, welcher in der Schnitt-Darstellung gemäß Fig. 2 dargestellt ist.

In Fig. 2 ist mit 2 eine Eingangswelle bezeichnet, die eine Bohrung zur Aufnahme der Abtriebswelle eines nicht gezeigten Antriebsmotors aufweist. Das Sonnenrad 4 ist mit der Antriebswelle verbunden und auf der dem Antriebsmotor abgewandten Seite in gleichzeitigem Zahneingriff mit den beiden um 180° versetzten großen Stufenrädern 6 der Stufenplaneten 8. Aufgrund des abgewinkelten Schnitt-Verlaufs ist von den beiden Stufenplaneten 8 in Fig. 2 nur einer zu sehen.

Die kleinen Stufenräder 10 der Stufenplaneten stehen mit einem Paar von benachbarten Planeten 12 in Eingriff. Die Stufenplaneten 8 und die Planeten 12 sind gemeinsam in einem Planetenträger 14 gelagert, der den Abtrieb bildet. Die Planeten 12 weisen jeweils genau eine durchgehende Verzahnung auf, welche gleichzeitig mit einem kleinen Stufenrad 10 eines Stufenplaneten 8 und dem Hohlrad 16 in Eingriff steht. Die Verzahnung der Planeten 12 mit dem Hohlrad16 und den kleinen Stufenrädern 10 der Stufenplaneten 8 liegt in derselben Axialebene, wodurch eine kurze axiale Bauform erzielt wird.

Auf der dem Abtriebsmotor abgewandten Seite weist der Planetenträger 14 einen Abtriebsflansch 20 auf. Der Abtriebsflansch 20 weist eine oder mehrere Ausnehmungen 22 auf, welche die großen Stufenräder 6 der Stufenplaneten 8 aufnehmen. An dieser Stelle sind die großen Stufenräder maximal entfernt vom Antriebsmotor angeordnet, woraus einige Vorteile resultieren:

In der Zeichnung links von der Verzahnungsebene der Stufenplaneten sind außer einem Deckel 17 keine Funktionselemente des Getriebes mehr vorhanden, was sich sehr günstig auf die axiale Baulänge auswirkt. An dieser Stelle können die großen Stufenräder 6 außerdem mit einem relativ großen Durchmesser ausgeführt werden, ohne dass sie in Konflikt mit der Planetenträgerlagerung oder dem Hohlrad geraten. Der Planetenträger 20 ist durch zwei Schräglager 24, 26 in dem Gehäuseteil 18 drehbar gelagert. Die beiden als Kugellager ausgebildeten Schräglager 24, 26 sind beidseits des Verzahnungsbereichs des Hohlrads 16 in O-Anordnung angeordnet. Das dem Antriebsmotor abgewandte Lager 24 ist axial zwischen dem Verzahnungsbereich des Hohlrads 16 und dem Verzahnungsbereich der großen Stufenräder 6 der Stufenplaneten 8 angeordnet. Der Hüllkreis um die großen Stufenräder 6 der Stufenplaneten 8 ist also nicht durch die Planetenträgerlager begrenzt. Der Durchmesser der großen Stufenräder 6 kann dementsprechend groß gewählt werden für hohe Gesamtübersetzungen.

Die hohe Übertragungstreue, Leistungsdichte und Unempfindlichkeit gegenüber Fertigungsungenauigkeiten beruht darauf, dass sowohl das Sonnenrad 4 in den Verzahnungen mit den großen Stufenrädern 6 der Stufenplaneten als auch die kleinen Stufenräder der Stufenplaneten 8 in den Verzahnungen mit den Planeten 12 fliegend gelagert sind und sich ihre jeweils für einen Lastausgleich erforderliche Position selbst suchen. Das Sonnenrad 4 und die Stufenplaneten 8 sind dabei jeweils durch ein einziges Lager gelagert, das axial entfernt von der jeweiligen Verzahnung angeordnet ist. Die Lagerungen sind in dem Maße winkelbeweglich, wie es für die Radialbewegung der Räder notwendig ist. Jeder Stufenplanet 8 ist also durch ein im Bereich des großen Stufenrads 6 angeordnetes Lager 28 im Planetenträger 14 gelagert. Das Sonnenrad 4 bzw. die Eingangswelle 2 ist auf der dem Antriebsmotor zugewandten Seite durch das Lager 30 in dem Gehäuseteil 19 gelagert, welches mit dem Gehäuseteil 18 verschraubbar ist.

Die Planeten 12 sind mittels Nadellager 32 drehbar auf Planetenbolzen 34 gelagert, welche in Bohrungen des Planetenträgers 14 sitzen und durch den Ring 36 gesichert sind.

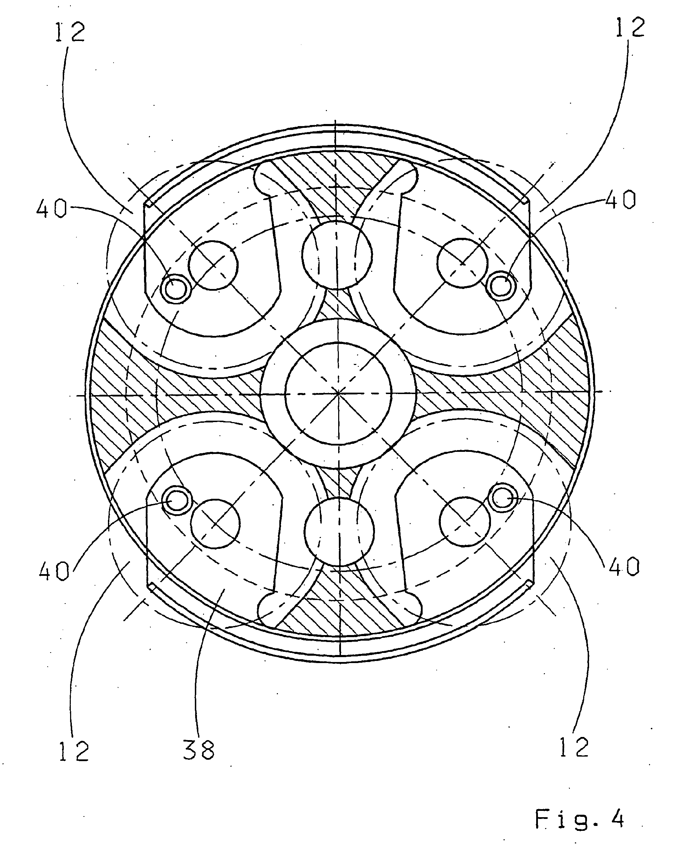

Das Hohlrad 16 und die Planeten 12 sind konisch ausgebildet, so dass ein Verzahnungsspiel durch axiales Zustellen der Planeten 12 einstell- bzw. beseitigbar ist. Die Planeten 12 werden in dem Konus des Hohlrads durch Anlaufscheiben 38 gehalten. Jedem der Planeten 12 ist ein Gewindestift 40 (Fig. 4) zugeordnet, der mit einem Ende in einer Gewindebohrung im Planetenträger 14 sitzt und mit dem anderen Ende die Anlaufscheibe 38 beaufschlagt und ein axiales Zurückweichen des Planeten 12 aus dem Zahneingriff mit dem Hohlrad verhindert. Ist, wie in Fig. 4 gezeigt, für jeweils zwei nebeneinanderliegende Planeten 12 eine gemeinsame Anlaufscheibe 38 vorgesehen, ist diese verdrehgesichert und eine exzentrische Beaufschlagung durch die Gewindestifte 40 führt nicht zu einem unerwünschten Verkippen.

Bei der in Fig. 2 dargestellten Ausführungsform der Erfindung verlaufen die Drehachsen 42 der Planeten 12 und die Drehachsen 44 der Stufenplaneten 8 parallel zur Getriebehauptachse 46. Daher sind die kleinen Stufenräder 10 der Stufenplaneten 8 konisch ausgebildet, wobei der Konus sich in Richtung zu den großen Stufenrädern 6 hin verjüngt. Die großen Stufenräder 6 der Stufenplaneten 8 und das Sonnenrad 4 sind zumindest annähernd zylindrisch ausgebildet. Zwischen den Außenringen der Lager 28 und einer Stirnseite der Lageraufnahme im Planetenträger 14 sind Federscheiben 48 angeordnet. Die Lager 28 und mit ihnen die Stufenplaneten 8 sind axial verschiebbar in der Aufnahme im Planetenträger 14. Die von den Federscheiben 48 erzeugte Axialkraft bewirkt, dass der Stufenplanet 8 so weit axial verschoben wird, bis ein Verzahnungsspiel am kleinen Stufenrad 10 beseitigt ist. Aufgrund dieser federnden Spielbeseitigung können Fertigungstoleranzen ausgeglichen werden und ein Klemmen des Getriebes wird verhindert.

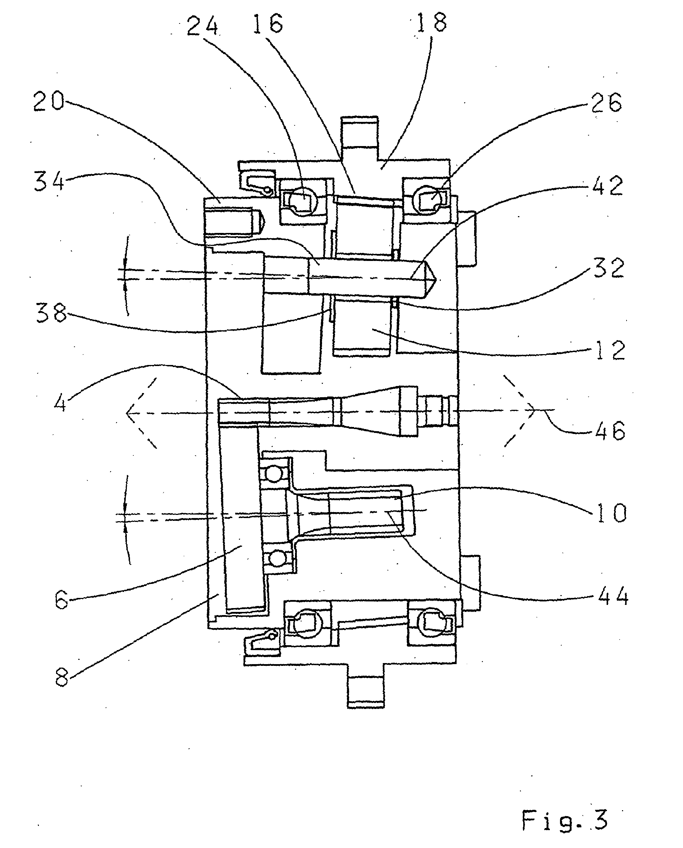

Fig. 3 zeigt eine alternative Ausführungsform eines erfindungsgemäßen Getriebes, bei dem die Drehachsen 42 der Planeten 12 um einen Neigungswinkel α und die Drehachsen 44 der Stufenplaneten 8 um einen Neigungswinkel β gegenüber der Getriebehauptachse 46 geneigt verlaufen, wobei die kleinen Stufenrädern 10 der Stufenplaneten 8, zumindest annähernd, zylindrisch ausgebildet sind. Im übrigen sind in der Fig. 3 für gleiche Positionen gleiche Bezugszeichen verwendet wie in Fig. 2. Die großen Stufenräder 6 der Stufenplaneten 8 sind konisch ausgebildet und das Sonnenrad zumindest annähernd zylindrisch. Die Stufenplaneten 8 sind sehr viel einfacher herstellbar, da die zylindrische Verzahnung der kleinen Stufenräder 10 im Einzelteilungs-Schleifverfahren hergestellt werden können. Die Drehachsen 42 der Planeten 12, die Drehachsen 44 der Stufenplaneten 8 und die Getriebehauptachse 46 schneiden sich, zumindest annähernd, in einem vom Getriebe entfernten Punkt.

Vorteilhafte Werte für die Neigungswinkel α der Planeten 12 und die Neigungswinkel β der Stufenplaneten liegen im Bereich zwischen 1,2 und 5,0°.

Das Spiel der Verzahnung zwischen Sonnenrad 4 und dem großen Stufenrad 6 der Stufenplaneten ist durch axiale Verschiebung der Stufenplaneten 8 entlang ihrer Drehachse 44 einstellbar.

### Bezugszeichen

- 2: Eingangswelle
- 4: Sonnenrad
- 6: großes Stufenrad
- 8: Stufenplanet
- 10: kleines Stufenrad
- 12: Planet
- 14: Planetenträger
- 16: Hohlrad
- 17: Deckel
- 18: Gehäuseteil
- 19: Gehäuseteil
- 20: Flansch
- 22: Ausnehmung
- 24: Lager
- 26: Lager
- 28: Lager
- 30: Lager
- 32: Lager
- 34: Planetenbolzen
- 36: Scheibe
- 38: Anlaufscheibe
- 40: Gewindestift
- 42: Planetenachse
- 44: Planetenachse
- 46: Getriebehauptachse

## Patentansprüche

1. Planetengetriebe mit einem von einem Antriebsmotor antreibbare Sonnenrad (4), einem in einem Gehäuse (18, 19) angeordneten Hohlrad (16), einer Gruppe von ersten Planeten (12) und einer Gruppe von zweiten Planeten die als Stufenplaneten (8) mit kleinen Stufenrädern (10) und großen Stufenrädem (6) ausgebildet sind, bei dem jeder der ersten Planeten (12) mit seinem einzigen Verzahnungsbereich gleichzeitig mit dem Hohlrad (16) und einem kleinen Stufenrad (10) eines Stufenplaneten (8) in Eingriff ist, die großen Stufenräder (6) der Stufenplaneten (8) mit dem Sonnenrad (4) in Eingriff sind und bei dem die ersten Planeten (12) und die Stufenplaneten (8) in einem gemeinsamen Planetenträger (14) gelagert sind, wobei die Anzahl der Stufenplaneten (8) der halben Anzahl der ersten Planeten (12) entspricht und die kleinen Stufenrädern (10) der Stufenplaneten gleichzeitig mit einem Paar von benachbarten ersten Planeten (12) in Eingriff stehen, **dadurch gekennzeichnet, dass** das Hohlrad (16), die ersten Planeten (12) und die kleinen Stufenräder (10) der Stufenplaneten (8) konisch ausgebildet sind, wobei der Konus der kleinen Stufenräder (10) der Stufenplaneten (8) sich in Richtung zu den großen Stufenrädern (6) hin verjüngt, dass die Drehachsen (42) der ersten Planeten (12) und die Drehachsen (44) der Stufenplaneten (8) parallel zu einer Getriebehauptachse (46) verlaufen und Einstellmittel (38, 40) für die Einstellung der axialen Position der ersten Planeten (12) vorgesehen sind.

2. Planetengetriebe nach Anspruch 1, **dadurch gekennzeichnet, dass** die großen Stufenräder (6) der Stufenplaneten (8) und das Sonnenrad (4) zumindest annähernd zylindrisch ausgebildet sind.

3. Planetengetriebe mit einem von einem Antriebsmotor antreibbaren Sonnenrad (4), einem in einem Gehäuse (18, 19) angeordneten Hohlrad (16), einer Gruppe von ersten Planeten (12) und einer Gruppe von zweiten Planeten, die als Stufenplaneten (8) mit kleinen Stufenrädern (10) und großen Stufenrädem (6) ausgebildet sind, bei dem jeder der ersten Planeten (12) mit seinem einzigen Verzahnungsbereich gleichzeitig mit dem Hohlrad (16) und einem kleinen Stufenrad (10) eines Stufenplaneten (8) in Eingriff ist, die großen Stufenräder (6) der Stufenplaneten (8) mit dem Sonnenrad (4) in Eingriff sind und bei dem die ersten Planeten (12) und die Stufenplaneten (8) in einem gemeinsamen Planetenträger (14) gelagert sind, wobei die Anzahl der Stufenplaneten (8) der halben Anzahl der ersten Planeten (12) entspricht und die kleinen Stufenräder (10) der Stufenplaneten gleichzeitig mit einem Paar von benachbarten ersten Planeten (12) in Eingriff stehen, **dadurch gekennzeichnet, dass** das Hohlrad (16) und die ersten Planeten (12) konisch ausgebildet sind, wobei sich der Konus des Hohlrads und der Konus jedes ersten Planetenrads in Richtung der Antriebsmotorseite des Planetengetriebes hin verjüngt und Einstellmittel (38, 40) für die Einstellung der axialen Position der ersten. Planeten (12) vorgesehen sind, dass die Drehachsen (42) der ersten Planeten (12) um einen Neigungswinkel a und die Drehachsen (44) der Stufenplaneten (8) um einen Neigungswinkel β gegenüber der Getriebehauptachse (46) geneigt verlaufen, dass die kleinen Stufenräder (10) der Stufenplaneten (8) zumindest annähernd zylindisch ausgebildet sind, und dass die Drehachsen (42) der ersten Planeten (12), die Drehachsen (44) der Stufenplaneten (8) und die Getriebehauptachse (46) sich zumindest annähernd in einem Punkt schneiden.

4. Planetengetriebe nach Anspruch 3, **dadurch gekennzeichnet, dass** die großen Stufenräder (6) der Stufenplaneten (8) konisch und das Sonnenrad, zumindest annähernd zylindrisch ausgebildet sind.

5. Planetengetriebe nach Anspruch 3 oder 4, **dadurch gekennzeichnet, dass** die Neigungswinkel α der ersten Planeten (12) und die Neigungswinkel β der Stufenplaneten (8) zwischen 1,2 und 5,0° betragen.

6. Planetengetriebe nach einem der vorhergehenden Ansprüche, **dadurch gekennzeichnet, dass** die Stufenplaneten (8) axial verschiebbar im Planetenträger (14) gelagert sind.

7. Planetengetriebe nach Anspruch 6, **dadurch gekennzeichnet, dass** Einstellmittel für die Einstellung der axialen Position der Stufenplaneten (8) entlang ihrer Drehachsen vorgesehen sind.

8. Planetengetriebe nach Anspruch 7, **dadurch gekennzeichnet, dass** Vorspannmittel vorgesehen sind, die eine Axialkraft vom Planetenträger auf die Stufenplaneten ausüben.

## Claims

1. Planetary transmission with a drive-motor-driven center gear (4), an internal gear (18) arranged in a housing (18, 19), a group of first planets (12) and a group of second planets, which are designed as stepped planet gears (8) with small stepped wheels (10) and big stepped wheels (6), with each first planet (12) meshing with its single toothed area simultaneously with the internal gear (16) and a small stepped wheel (10) of a stepped planet gear (8), with the big stepped wheels (6) of the stepped planet gears (8) meshing with the center gear (4), with the first planets (12) and the stepped planet gears (8) being supported in a common planet carrier (14), with the number of stepped planet gears (8) corresponding to half the number of first planets (12), and with the small stepped wheels (10) of the stepped planet gears simultaneously meshing with a pair of neighboring first planets (12), **characterized in that** the internal gear (16), the first planets (12) and the small stepped wheels (10) of the stepped planet gears (8) are conically designed, with the cone of the small stepped wheels (10) of the stepped planet gears (8) tapering towards the big stepped wheels (6), and **in that** the rotation axes (42) of the first planets (12) and the rotation axes (44) of the stepped planet gears (8) run parallel to a main transmission axis (46), and that adjusting means (38, 40) for adjustment of the axial position of the first planets (12) are provided.

2. Planetary transmission according to claim 1, **characterized in that** the big stepped wheels (6) of the stepped planet gears (8) and the center gear (4) are of a design that is at least approximatively cylindrical.

3. Planetary transmission with a drive-motor-driven center gear (4), an internal gear (16) arranged in a housing (18, 19), a group of first planets (12) and a group of second planets, which are designed as stepped planet gears (8) with small stepped wheels (10) and big stepped wheels (6), with each first planet (12) meshing with its single toothed area simultaneously with the internal gear (16) and a small stepped wheel (10) of a stepped planet gear (8), with the big stepped wheels (6) of the stepped planet gears (8) meshing with the center gear (4), with the first planets (12) and the stepped planet gears (8) being supported in a common planet carrier (14), with the number of stepped planet gears (8) corresponding to half the number of first planets (12), and with the small stepped wheels (10) of the stepped planet gears simultaneously meshing with a pair of neighboring first planets (12), **characterized in that** the **internal gear** (16) and the first planets (12) are conically designed, with the cone of the internal gear and the cone of each first planet wheel tapering towards the drive-motor side of the planetary transmission, and that adjusting means (38, 40) for adjustment of the axial position of the first planets (12) are provided, that the rotation axes (42) of the first planets (12) are inclined by an angle α and the rotation axes (44) of the stepped planet gears (8) are inclined by an angle β relative to the transmission main axis (46), that the small stepped wheels (10) of the stepped planet gears (8) are of design that is at least approximatively cylindrical, and that the rotation axes (42) of the first planets (12), the rotation axes (44) of the stepped planet gears (8) and the transmission main axis (46) intersect at least approximatively.

4. Planetary transmission according to claim 3, **characterized in that** the big stepped wheels (6) of the stepped planet gears (8) are conically designed and the center gear is of a design that is at least approximatively cylindrical.

5. Planetary transmission according to claim 3 or 4, **characterized in that** the angles of inclination a of the first planets (12) and the angles of inclination β of the stepped planet gears (8) are between 1.2 and 5.0°.

6. Planetary transmission according to one of the preceding claims, **characterized in that** the stepped planet gears (8) are axially displaceably supported in the planet carrier (14).

7. Planetary transmission according to claim 6, **characterized in that** adjusting means are provided for adjustment of the axial position of the stepped planet gears (8) along their rotation axes.

8. Planetary transmission according to claim 7, **characterized in that** preloading means are provided which exert an axial force from the planet carrier on the stepped planet gears.

## Revendications

1. Boîte de vitesses à trains épicycloïdaux dotée d'un pignon planétaire (4) qui peut être entraîné par un moteur d'entraînement, d'une couronne (16) disposée dans un carter (18, 19), d'un groupe de premiers satellites (12) et d'un groupe de deuxièmes satellites, ceux-ci étant réalisés comme satellites à gradins (8) avec des petites roues à gradins (10) et des grandes roues à gradins (6), sur laquelle chacun des premiers satellites (12) est simultanément en prise - par sa seule zone de denture - avec la couronne (16) et une petite roue à gradins (10) d'un satellite à gradins (8), les grandes roues à gradins (6) des satellites à gradins (8) sont en prise avec le pignon planétaire (4) et sur laquelle les premiers satellites (12) et les satellites à gradins (8) sont logés dans un arbre porte-satellites commun (14), sachant que le nombre de satellites à gradins (8) correspond à la moitié du nombre des premiers satellites (12) et que les petites roues à gradins (10) des satellites à gradins sont simultanément en prise avec un couple de premiers satellites juxtaposés (12), **caractérisée en ce que** la couronne (16), les premiers satellites (12) et les petites roues à gradins (10) des satellites à gradins (8) sont réalisés de façon conique, sachant que le cône des petites roues à gradins (10) des satellites à gradins (8) diminue en direction des grandes roues à gradins (6), **en ce que** les axes de rotation (42) des premiers satellites (12) et les axes de rotation (44) des satellites à gradins (8) sont disposés parallèlement par rapport à un axe principal de la boîte de vitesses (46) et **en ce que** sont prévus des moyens de réglage (38, 40) de la position axiale des premiers satellites (12).

2. Boîte de vitesses à trains épicycloïdaux selon la revendication 1, **caractérisée en ce que** les grandes roues à gradins (6) des satellites à gradins (8) et le pignon planétaire (4) sont réalisés au moins quasi-cylindriquement.

3. Boite de vitesses à trains épicycloïdaux dotée d'un pignon planétaire (4) qui peut être entraîné par un moteur d'entraînement, d'une couronne (16) disposée dans un carter (18, 19), d'un groupe de premiers satellites (12) et d'un groupe de deuxièmes satellites, ceux-ci étant réalisés comme satellites à gradins (8) avec des petites roues à gradins (10) et des grandes roues à gradins (6), sur laquelle chacun des premiers satellites (12) est simultanément en prise - par sa seule zone de denture - avec la couronne (16) et une petite roue à gradins (10) d'un satellite à gradins (8), les grandes roues à gradins (6) des satellites à gradins (8) sont en prise avec le pignon planétaire (4), et sur laquelle les premiers satellites (12) et les satellites à gradins (8) sont logés dans un arbre porte-satellites commun (14), sachant que le nombre de satellites à gradins (8) correspond à la moitié du nombre des premiers satellites (12) et que les petites roues à gradins (10) des satellites à gradins sont simultanément en prise avec un couple de premiers satellites juxtaposés (12), **caractérisée en ce que** la couronne (18) et les premiers satellites (12) sont réalisés de façon conique, sachant que le cône de la couronne et le cône de chaque premier satellite diminue en direction du côté du moteur d'entraînement de la boite à trains épicycloïdaux et **en ce que** sont prévus des moyens de réglage (38, 40) de la position axiale des premiers satellites (12), **en ce que** les axes de rotation (42) des premiers satellites (12) sont inclinés d'un angle α et les axes de rotation (44) des satellites à gradins (8) sont inclinés d'un angle β par rapport à l'axe principal de la boite de vitesses (46), **en ce que** les petites roues à gradins (10) des satellites à gradins (8) sont réalisés au moins quasi-cylindriquement, et **en ce que** les axes de rotation (42) des premiers satellites (12), les axes de rotation (44) des satellites à gradins (8) et l'axe principal de rotation (46) se coupent au moins à peu près au même point.

4. Boîte de vitesses à trains épicycloïdaux selon la revendication 3, **caractérisée en ce que** les grandes roues à gradins (6) des satellites à gradins (8) sont réalisées de façon conique et le pignon planétaire est réalisé au moins quasi-cylindriquement.

5. Boite de vitesses à trains épicycloïdaux selon la revendication 3 ou 4, **caractérisée en ce que** les angles d'inclinaison α des premiers satellites (12) et les angles d'inclinaison β des satellites à gradins (8) sont compris entre 1,2 et 5,0°.

6. Boite de vitesses à trains épicycloïdaux selon une des revendications précédentes, **caractérisée en ce que** les satellites à gradins (8) sont logés de façon axialement déplaçable dans l'arbre porte-satellites (14).

7. Boîte de vitesses à trains épicycloïdaux selon la revendication 6, **caractérisée en ce que** sont prévus des moyens de réglage de la position axiale des satellites à gradins (8) le long de leurs axes de rotation.

8. Boîte de vitesses à trains épicycloïdaux selon la la revendication 7, **caractérisée en ce que** sont prévus des moyens de précontrainte exerçant une force axiale à partir de l'arbre porke-satellites sur les satellites à gradins.
